# EUROPÄISCHE PATENTSCHRIFT

(11) **EP 0 944 901 B1**
(45) Veröffentlichungstag und Bekanntmachung des Hinweises auf die Patenterteilung: **26.07.2000**
(21) Anmeldenummer: 97951839.6
(22) Anmeldetag: 08.12.1997
(51) Int. Cl.: G11B 17/22

(54) **PLATTENWIEDERGABE- UND/ODER AUFZEICHNUNGSGERÄT UND VERFAHREN ZUR POSITIONIERUNG DER PLATTEN-TRANSPORTEINRICHTUNG DESSELBEN**
DISC REPRODUCTION AND SOUND-ON-DISC RECORDING, AND POSITION SETTING ON THE TRANSFER MECHANISM
EQUIPEMENT DE REPRODUCTION/ENREGISTREMENT DE DISQUES, ET REGLAGE DES POSITIONS DU MECANISME DE TRANSFERT

(30) Priorität: 13.12.1996 DE 19651823
(43) Veröffentlichungstag der Anmeldung: 29.09.1999
(73) Patentinhaber: NSM AKTIENGESELLSCHAFT, 55411 Bingen (DE)
(72) Erfinder: SCHELLONG, Horst, D-55129 Mainz (DE); PITZ, Ulrich, D-55576 Sprendlingen (DE)
(74) Vertreter: Becker, Bernd, Dipl.-Ing.
(86) Internationale Anmeldenummer: DE9702866
(87) Internationale Veröffentlichungsnummer: WO9826415

(56) Entgegenhaltungen:
- EP-A- 0 145 268
- EP-A- 0 392 620
- EP-A- 0 640 966
- EP-A- 0 697 695
- WO-A-90/05362
- WO-A-94/29861
- DE-A- 4 313 373
- US-A- 4 817 070

## Beschreibung

Die Erfindung betrifft ein Plattenwiedergabe- und/oder -aufzeichnungsgerät, umfassend als Platteneinheiten mindestens ein Laufwerk und mindestens ein Plattenmagazin mit Aufnahmefächern für die Platten sowie eine Transporteinrichtung, die die Platten zwischen den Platteneinheiten transportiert, wobei die Transporteinrichtung für den Entnahme- und Einführvorgang den jeweiligen Platteneinheiten in entsprechenden Entnahme/Einführpositionen gegenüberliegt, eine Speichereinrichtung für die einzelnen Entnahme/Einführpositionen vorgesehen ist, eine Einstellvorrichtung für Korrekturwerte jeweils der Entnahme/Einführpositionen in bezug auf die Standardwerte der Entnahme/Einführpositionen vorgesehen ist und jede der Entnahme/Einführpositionen der Transporteinrichtung korrigiert wird. Ferner betrifft die Erfindung ein Verfahren zur Positionierung einer Transporteinrichtung in Entnahme/Einführpositionen vor Platteneinheiten eines Plattenwiedergabe- und/oder -aufzeichnungsgeräts, bei dem für jede einzelne Position der Platteneinheiten die zugehörige Position der Transporteinrichtung bestimmt wird, in der sie den Platteneinheiten für die Entnahme/Einführung von Platten dieser gegenüberliegt und die Korrekturdaten der bestimmten Positionen gespeichert und zur Antriebssteuerung der Transporteinrichtung für die Entnahme/Einführung von Platten verwendet werden.

Derartige Plattenwiedergabe- und/oder -aufzeichnungsgeräte weiser, verschiedene Platteneinheiten auf, beispielsweise ein oder mehrere Magazine mit Fächern für die einzelnen Platten, in denen die Platten allein oder zusammen mit einem Plattenhalter untergebracht sind, Laufwerke zum Abspielen und/oder Beschreiben der Platten, Eingabe/Ausgabefächer (Mailslots), etc. Für die Wiedergabe- und -aufzeichnungsvor-gänge und dergleichen müssen die Platten jeweils von einer Platteneinheit zu einer anderen transportiert werden, wozu eine Transporteinrichtung dient. Zum Entnehmen der Platten aus den Platteneinheiten und zum Einführen in diese wird die Transporteinrichtung jeweils gegenüber diesen in den entsprechenden Positionen positioniert. Die Positionsdaten sind jeweils entsprechend dem Gerätetyp und Typ der Einheiten und deren Einbaupositionen fest vorgegeben. Infolge von Fertigungstoleranzen der Geräte und Einheiten sowie Toleranzen von deren Montage ergeben sich jedoch häufig Positionsabweichungen, die zu übermäßiger Abnutzung der Teile und insbesondere auch zu Beschädigungen der Platten führen können.

Zur Kompensation von solchen Toleranzen wird derzeit von Hand mittels entsprechender Meßlehren einmalig die Position der Transporteinrichtung in bezug auf das Gerät verstellt. Dies ist indessen nicht ausreichend, um die Positionsabweichungen der einzelnen Platteneinheiten sowie ggf. von deren einzelnen Fächern zu korrigieren.

Gemäß einem älteren, nicht vorveröffentlichten Vorschlag für ein Plattenwiedergabe- und/oder -aufzeichnungsgerät wird zur Feststellung, ob die Transporteinrichtung überhaupt einen Plattenhalter mit ggf. einer Platte trägt, eine Erkennnungseinrichtung verwendet, die als Infrarot- oder Ultraschall-Lichtschranke ausgeführt ist.

Die EP-A-0 697 695 offenbart ein Plattenwiedergabe- und/oder -aufzeichnungsgerät mit einem Laufwerk, einem Plattenmagazin mit Aufnahmefächern und einer Transporteinrichtung für die Platten, einer Speichereinrichtung für einzelne Entnahme/Einführpositionen sowie einer Einstellvorrichtung für Korrekturwerte jeweils für die Positionen in bezug auf die Standardwerte der Positionen, wobei jede der Positionen der Transporteinrichtung korrigiert werden kann.

Ferner offenbart die EP-A-0 145 268 ein Wiedergabe und/oder Aufzeichnungsgerät mit einem Kassettenmagazin mit Aufnahmefächern und einer Transporteinrichtung für die Kassetten. Weiterhin umfaßt das Wiedergabe- und/oder Aufzeichnungsgerät eine Speichereinrichtung für einzelne Entnähme/Einführpositionen der Transporteinrichtung sowie eine Einstellvorrichtung für Korrekturwerte jeweils für die Positionen in bezug auf die Standardwerte der Positionen, wobei jede der Positionen der Transporteinrichtung korrigiert werden kann.

Der Erfindung liegt die Aufgabe zugrunde, eine Positionskorrektur für eine Platten-Transporteinrichtung in einem Plattenwiedergabe- und/oder -aufzeichnungsgerät vorzusehen.

Diese Aufgabe ist erfindungsgemäß bei einem Plattenwiedergabeund/oder -aufzeichnungsgerät und bei einem Verfahren mit den Merkmalen der Ansprüche 1 bzw. 7 gelöst. Vorteilhafte Ausführungsbeispiele des erfindungsgemäßen Plattenwiedergabe- und/ oder -äufzeichnungsgeräts und des Positionierverfahrens sind Gegenstand der Unteransprüche.

Bei einem erfindungsgemäßen Plattenwiedergabe- und/oder -aufzeichnungsgerät erfaßt durch ein schrittweises Verfahren der Transporteinrichtung aus einer vorgegebenen Entnahme/Einführposition um jeweils eine Korrekturstrecke nach oben bzw. nach unten und ein sich nach jeden Verfahren daran anschließendes Entnehmen des Plattenhalters durch die Auszugseinrichtung eine Erfassungsvorrichtung für die einzelne Positionserfassung jeweils einen oberen bzw. einen unteren Positionsgrenzwert, bei dem die Auszugseinrichtung den Plattenhalter dem Aufnahmefach nicht mehr entnimnt und die Erfassungsvorrichtung erstellt einen Korrekturwert von den Positionsgrenzwerten.

Ferner ist Gegenstand der Erfindung ein Verfahren zur Positionierung einer Transporteinrichtung in Entnahme/Einführpositionen vor Platteneinheiten eines Plattenwiedergabe- und/oder -aufzeichnungsgeräts, bei dem durch ein schrittweises Verfahren der Transporteinrichtung aus einer vorgegebenen Entnahme/Einführposition um jeweils eine Korrekturstrecke nach oben bzw, nach unten und ein sich nach jedem Verfahren daran anschließendes Entnehmen des Plattenhalters durch die Auszugseinrichtung jeweils ein oberer und ein unterer Positionsgrenzwert ermittelt wird, der zur Feststellung eines Korrekturwerts dient, wobei die Auszugseinrichtung bei Erreichen des oberen bzw. unteren Positionsgrenzwertes den Plattenhalter dem Auf nahmefach nicht mehr entnimmt.

Gemäß der Erfindung wird nicht ein fester Satz von Positionsdaten bestimmt und für die Entnahme- und Einführoperationen der Transporteinrichtung verwendet. Vielmehr wird gemäß der Erfindung für jede einzelne Position bzw. jedes einzelne Fach oder dergleichen der Plattereinheiten die entsprechend gegenüberliegende zugehörige Position der Transporteinrichtung, d.h. die jeweils entsprechende Arbeitsposition der Transporteinrichtung, bestimmt und gespeichert.

Vorzugsweise ist eine Vorrichtung vorgesehen, die die Entnahme/Einführpositionen der Transporteinrichtung für die Einheiten einzeln erfaßt, wobei die erfaßten Positionswerte zur Korrektur der Standardwerte dienen. Es kann so jedesmal ein Korrekturwert gespeichert und zur Korrektur der fest vorgegebenen Positionsdaten verwendet werden, d.h. es werden zunächst Standardwerte für die einzelnen Einführ/Entnahmepositionen gespeichert und die anschließend nacheinander bestimmten Positionsdaten zur Korrektur der gespeicherten Standardwerte verwendet. Alternativ ist es auch möglich, in der Speichervorrichtung die korrigierten Positionswerte bzw. -daten oder auch direkt die einzeln bestimmten Positionsdaten in der zugehörigen Speichereinrichtung zu speichern. Gemäß einem bevorzugten Ausführungsbeispiel der Erfindung ist die Speichereinrichtung ein Festspeicher, wie ein ROM oder EPROM.

Gemäß einem bevorzugten Ausführungsbeispiel des erfindungsgemäßen Plattenwiedergabe- und/oder -aufzeichnungsgeräts bestimmt die Vorrichtung zur einzelnen Erfassung der Entnahme/Einführpositionen der Transporteinrichtung die Positionen der Transporteinrichtung anhand von Positionsdaten der zugeordneten Antriebsvorrichtung. Hierbei werden die ermittelten Positionsdaten der der Transporteinrichtung zugeordneten Antriebseinrichtung zur Positionsbestimmung und/oder Korrektur verwendet.

Vorteilhaft kann so die Positionskorrektur automatisch und insbesondere ohne weitere zusätzliche Einheiten, wie Signalgeber und Sensoren, durchgeführt werden. Es sind lediglich Anpassungen bei der Antriebssteuerung erforderlich.

Vorteilhaft erfaßt die Erfassungsvorrichtung für die einzelne Positionserfassung die beiden Positionsgrenzwerte, beispielsweise eine oberstmögliche und eine unterstmögliche Höhenposition, Bei einer Horizontalanordnung der einzelnen Fächer beispielsweise sind dies dann der am weitesten links und der am weitesten rechts Liegende Positionswert, bei dem noch eine kollisionsfreie Handhabung der Platte bzw. des Plattenhalters beim Entnahme/Einführvorgang möglich ist, Bei einem Ausführungsbeispiel der Erfindung werden zwei Grenzwerte jeweils für die einzelnen Positionen bestimmt. Vorzugsweise wird hieraus der Mittelwert ermittelt.

Die Bestimmung der Grenzwerte kann beispielsweise dadurch erfolgen, daß die Transporteinrichtung so weit in Grenzpositionen für ein bestimmtes Fach verfahren wird, daß eine Entnahme oder Einführung einer Platte bzw. eines Plattenhalters mit einer Platte nicht mehr möglich ist. Dies ist praktisch eine empirische Ermittlung der genauen Position der Transporteinrichtung für die Entnahme/Einführvorgänge.

Die Erfindung wird im folgenden weiter anhand eines bevorzugten Ausführungsbeispiels beschrieben und ist nicht auf diese Darstellung beschränkt. Das Ausführungsbeispiel dient lediglich zu Erläuterungszwecken und ist als nicht einschränkend anzusehen. Vielmehr können sämtliche Merkmale allein oder in Kombination, auch unabhängig von ihrer Zusammenfassung in den Ansprüchen, verwendet werden.

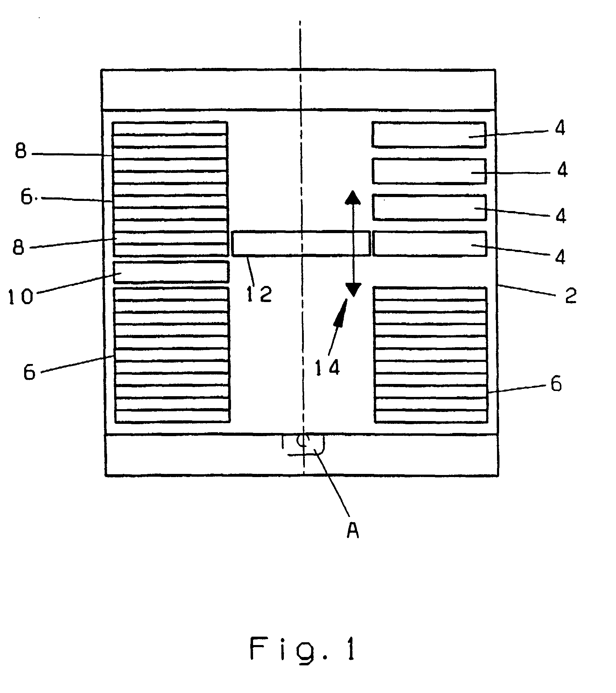

In der Zeichnung zeigt
- Fig. 1: eine schematische Vorderansicht eines Plattenwiedergabe- und/oder -aufzeichnungsgeräts gemäß der Erfindung.

Das Plattenwiedergabe- und/oder Aufzeichnungsgerät, im folgenden Gerät 1, umfaßt ein Gehäuse 2, in dem mehrere Platteneinheiten untergebracht sind. Die Platteneinheiten umfassen Laufwerke 4 zum Lesen von auf Platten gespeicherten Informationen und ggf. auch zum Schreiben Von Informationen auf die Platten. Die Laufwerke 4 sind jeweils Einschubteile und damit auswechselbar. In herkömmlicher Weise sind die Laufwerke 4 in den Einschüben längs Führungen einschiebbar und herausziehar.

Das Gehäuse 2 enthält ferner als Platteneinheiten drei Plattenmagazine 6, die ebenfalls als Einschubteile ausgeführt sind. Die Plattenmagazine 6 umfassen jeweils eine Anzahl von Aufnahmefächern 8 für in Plattenhalter eingelegte Platten.

Weiterhin ist bei dem veranschaulichten Gerät 1 als Platteneinheit ein Ladeschubfach 10 vorgesehen, das zum Beschicken des Geräts 1 mit Platten oder zum Austausch von Platten dient. Das Ladeschubfach 10 kann nach vorne vorgezogen werden, so daß dann ein mit einer Platte bestückter Plattenhalter bzw. -träger aufgelegt werden kann. Anschließend wird das Ladeschubfach 10 wieder zurückgeschoben oder automatisch eingefahren.

Für den Transport von Platten mit Plattenträgern zwischen den Platteneinheiten 4, 6, 10 ist zwischen den gegenüberliegenden Platteneinheiten 4, 6, 10 eine motorgetriebene Transporteinrichtung 12 vorgesehen. Diese ist, wie der Pfeil 14 veranschaulicht, aufwärts und abwärts verfahrbar. Dabei ist der Transporteinrichtung eine Anzahl von Haltepositionen, die Arbeitspositionen für diese darstellen, zugeordnet. In entsprechender Halteposition liegt die Transporteinrichtung 12 einem Laufwerk 6, einem Aufnahmefach 8 eines Plattenmagazins 6 oder dem Ladeschubfach 10 gegenüber. Die Transporteinrichtung 12 weist mindestens eine nicht dargestellte Auszugeinrichtung auf, mittels der sie eine Platte beispielsweise aus einem Aufnahmefach 8, d.h. den betreffenden Plattenträger mit der Platte, entnehmen und auf ihrer Transportablage für den Transport ablegen kann. Nach einer Verstellung der Transporteinrichtung 12 wird die Platte dann wieder mittels der Auszugeinrichtung beispielsweise in einem anderen Aufnahmefach 8 abgelegt. Bei dem dargestellten Ausführungsbeispiel ist die Transporteinrichtung, wie erwähnt aufwärts und abwärts verfahrbar, und entnimmt die Platten jeweils von links oder rechts und legt sie entsprechend wieder am gewünschten Zielort zurück.

Mittels einer Vorrichtung A, die einen Signalgeber und einen -empfänger umfaßt, wird geprüft, ob ein Plattenhalter mit einer Platte in die Transporteinrichtung eingezogen ist.

Das Plattenwiedergabe- und -aufzeichnungsgerät macht bei der Positionskorrektur der Vertikalposition der Transporteinrichtung von den Positionsdaten der Antriebseinrichtung (Schrittmotor) für die Transporteinrichtung Gebrauch. Die Positionskorrektur läuft beispielsweise für die Plattenmagazine 6 wie folgt ab:

Als erstes wird ein bestimmtes Aufnahmefach 8 als das Testfach festgelegt. Dann werden die beiden benachbarten darüber und darunter befindlichen Aufnahmefächer von eventuell darin bevorrateten Platten entleert, indem diese in Laufwerken abgelegt werden, so daß die Platten bei den folgenden Manipulationen nicht beschädigt werden können.

Die Transporteinrichtung 12 wird dann in einer Mittelposition gegenüber dem festgelegten Aufnahmefach 8 positioniert. Der Plattenhalter wird aus dem Aufnahmefach 8 entnommen, was mittels eines Sensors, beispielsweise in Form einer Lichtschranke mit gegenüberliegendem Empfänger, überwacht werden kann. Dieser Sensor kann erfassen, ob sich auf der Transporteinrichtung 12 ein Plattenhalter befindet. Befindet sich ein Plattenhalter auf der Transporteinrichtung 12, wird die Transporteinrichtung 12 um eine Korrekturstrecke, beispielsweise nach oben verfahren. Das Einziehen des Plattenhalters wird nun wiederholt und überwacht. Dieser Vorgang wird schrittweise wiederholt, bis ein letztes Anheben um eine Korrekturstrecke dazu geführt hat, daß der Plattenträger nicht mehr entnommen werden kann oder nicht entnommen wird. In dieser Position greift ein Greifer der Auszugeinrichtung der Transporteinrichtung 12 einfach am Plattenhalter vorbei, weil die Auszugeinrichtung zu hoch ist. Der zugehörige Korrekturwert oder die Positionsdaten werden gespeichert für einen oberen Grenzwert. Anschließend wird die Transporteinrichtung 12 wieder in der Mittelposition angeordnet und der Vorgang wird in Abwärtsrichtung wiederholt, d.h. die Korrekturstrecken werden nach unten aneinander gereiht, bis der Plattenhalter wiederum nicht mehr entnommen werden kann. Es wird ein zweiter unterer Grenzwert gespeichert. Der Mittelwert der beiden Grenzwerte wird als Korrekturwert für das entsprechende Plattenmagazin 6 verwendet.

Es ist auch möglich, falls nennenswerte Po itionsabweichungen bei den einzelnen Aufnahmefächern 8 auftreten, für die Aufnahmefächer 8 einzeln Positionskorrekturen orzunehmen.

Der Korrekturvorgang wird für sämtliche Platteneinheiten 4, 6, 10 durchgeführt. Die Korrekturwerte werden gespeichert und beim Anfahren der einzelnen Fächer in die betreffenden Positionsdaten eingerechnet.

## Patentansprüche

1. Plattenwiedergabe- und -aufzeichnungsgerät umfassend als Platteneinheiten mindestens ein Laufwerk (4) und mindestens ein Plattenmagazin (6) mit Aufnahmefächern (8) für die Platten sowie eine Transporteinrichtung (12), die die Platten zwischen den Platteneinheiten transportiert, wobei
- die Transporteinrichtung (12) für den Entnahme- und Einführvorgang den jeweiligen Platteneinheiten in entsprechenden Entnahme/Einführpositionen gegenüberliegt,
- eine Speichereinrichtung für die einzelnen Entnahme/Einführpositionen vorgesehen ist,
- eine Einstellvorrichtung für Korrekturwerte jeweils der Entnahme/Einführpositionen in bezug auf die Standardwerte der Entnahme/Einführpositionen vorgesehen ist und jede der Entnahme/Einführpositionen der Transporteinrichtung (12) korrigiert wird,
**dadurch gekennzeichnet**, daß durch ein schrittweises Verfahren der Transporteinrichtung (12) aus einer vorgegebenen Entnahme/Einführposition um jeweils eine Korrekturstrecke nach oben bzw. nach unten und ein sich nach jedem Verfahren daran anschließendes Entnehmen des Plattenhalters durch die Auszugseinrichcung eine Erfassungsvorrichtung für die einzelne Positionserfassung jeweils einen oberen bzw. einen unteren Positionsgrenzwert erfaßt, bei dem die Auszugseinrichtung den Plattenhalter dem Aufnahmefach (8) nicht mehr entnimmt und die Erfassungsvorrichtung einen Korrekturwert von den Positionsgrenzwerten erstellt.

2. Plattenwiedergabe- und/oder -aufzeichnungsgerät nach Anspruch 1, **dadurch gekennzeichnet,** daß eine Vorrichtung vorgesehen ist, die die Entnahme/Einführpositionen der Transporteinrichtung für die Platteneinheiten einzeln erfaßt, wobei die erfaßten Positionswerte zur Korrektur der Standardwerte dienen.

3. Plattenwiedergäbe- und/oder -aufzeichnungsgerät nach Anspruch 1 oder 2, **dadurch gekennzeichnet,** daß in der Speichervorrichtung die korrigierten Positionswerte gespeichert sind.

4. Plattenwiedergabe- und/oder -aufzeichnungsgerät nach Anspruch 3, **dadurch gekennzeichnet,** daß die Vorrichtung zur einzelnen Erfassung der Entnahme/Einführpositionen der Transporteinrichtung die Positionen der Transporteinrichtung anhand von Positionsfaten der zugeordneten Antriebsvorrichtung bestimmt.

5. Plattenwiedergabe- und/oder -aufzeichnungsgerät nach einem der Ansprüche 1 bis 4, **dadurch gekennzeichnet,** daß die Speichereinrichtung ein Festspeicher (ROM) oder (EPROM) ist.

6. Plattenwiedergabe- und/oder -aufzeichnungsgerät nach einem der Ansprüche 1 bis 5, **dadurch gekennzeichnet**, daß eine Vorrichtung (A) mittels eines optischen Signalgebers und - empfängers das Vorhandensein einer Platte in der Transporteinrichtung erfaßt.

7. Verfahren zur Positionierung einer Transporteinrichtung (12) in Entnahme-/Einführpositionen vor Platteneinheiten eines Plattenwiedergabe- und -aufzeichnungsgeräts, bei dem
- für jede einzelne Position der Platteneinheiten (4, 6, 10) die zugehörige Position der Transporteinrichtung (12) bestimmt wird, in der sie den Platteneinheiten für die Entnahme/Einführung von Platten dieser gegenüberliegt und
- die Korrekturdaten der bestimmten Positionen gespeichert und zur Antriebssteuerung der Transporteinrichtung (12) für die Entnahme/Einführung von Platten verwendet werden,
**dadurch gekennzeichnet,** daß durch ein schrittweises Verfahren der Transporteinrichtung (12) aus einer vorgegebenen Entname/Einführposition um jeweils eine Korrekturstrecke nach oben bzw. nach unten und ein sich nach jedem Verfahren daran anschließendes Entnehmen des Plattenhalters durch die Auszugseinrichtung jeweils ein oberer und ein unterer Positionsgrenzwert ermittelt wird, der zur Feststellung eines Korrekturwerts dient, wobei die Auszugseinrichtung bei Erreichen des oberen bzw. unterer. Positionsgrenzwertes den Plattenhalter dem Aufnahmefach (8) nicht mehr entnimmt.

8. Verfahren nach Anspruch 7, **dadurch gekennzeichnet**, daß Standardwerte für die einzelnen Entnahme-/Einführpositionen gespeichert werden und die durch die einzelnen Entnahme-/Einführpositionen bestimmten Positionsdaten der Transporteinrichtung (12) zur Korrektur der gespeicherten Standardwerte verwendet werden.

9. Verfahren nach Anspruch 7 oder 8, **dadurch gekennzeichnet,** daß die Positionsdaten der der Transporteinrichtung (12) zugeordneten Antriebseinrichtung zur Positionsbestimmung und/oder Korrektur verwendet werden.

10. Verfahren nach Anspruch 9, **dadurch gekennzeichnet,** daß aus beiden Grenzwerten der Mittelwert bestimmt wird

## Claims

1. Disc playback and recording apparatus, including, as disc units, at least one drive assembly (4) and at least one disc magazine (6) having accommodation compartments (8) for the discs, as well as a conveyor (12), which conveys the discs between the disc units, wherein
- the conveyor (12) for the removal and introduction operations is situated opposite the respective disc units in appropriate removal/introduction positions,
- a storage means is provided for the individual removal/introduction positions,
- an adjuster is provided for correction values of the particular removal/introduction positions relative to the standard values of the removal/introduction positions, and each of the removal/introduction positions of the conveyor (12) is corrected,
characterised in that, by stepwisely moving the conveyor (12) from a prescribed removal/introduction position over a particular correction path upwardly or downwardly, and by subsequently removing the disc holder by means of the extractor after each movement, a detector for detecting the individual positions detects an upper or lower position limit value, at which the extractor no longer removes the disc holder from the accommodation compartment (8), and the detector generates a correction value from the position limit values.

2. Disc playback and/or recording apparatus according to claim 1, characterised in that a device is provided, which detects individually the removal/introduction positions of the conveyor for the disc units, the detected position values serving to correct the standard values.

3. Disc playback and/or recording apparatus according to claim 1 or 2, characterised in that the corrected position values are stored in the storage means.

4. Disc playback and/or recording apparatus according to claim 3, characterised in that the device for individually detecting the removal/introduction positions of the conveyor determines the positions of the conveyor with reference to positional data of the associated driving arrangement.

5. Disc playback and/or recording apparatus according to one of claims 1 to 4, characterised in that the storage means is a read-only memory (ROM) or (EPROM).

6. Disc playback and/or recording apparatus according to one of claims 1 to 5, characterised in that an arrangement (A) detects the presence of a disc in the conveyor by means of an optical signal transmitter and receiver.

7. Method of positioning a conveyor (12) in removal/introduction positions in front of disc units of a disc playback and recording apparatus, wherein
- for each individual position of the disc units (4, 6, 10), the associated position of the conveyor (12) is determined, in which it is situated opposite the disc units for the removal/introduction of discs thereof, and
- the correction data of the determined positions are stored and used to control the drive of the conveyor (12) for the removal/introduction of discs, characterised in that, by stepwisely moving the conveyor (12) from a prescribed removal/introduction position over a particular correction path upwardly or downwardly, and by subsequently removing the disc holder by means of the extractor after each movement, a respective upper and a respective lower position limit value are determined, which value is used for setting a correction value, the extractor no longer removing the disc holder from the accommodation compartment (8) once the upper or lower position limit value has been reached.

8. Method according to claim 7, characterised in that standard values are stored for the individual removal/introduction positions, and the positional data of the conveyor (12), determined by the individual removal/introduction positions, are used for correcting the stored standard values.

9. Method according to claim 7 or 8, characterised in that the positional data of the driving arrangement associated with the conveyor (12) are used for the determination of positions and/or for correction.

10. Method according to claim 9, characterised in that the mean value is determined from both limit values.

## Revendications

1. Appareil de lecture et d'enregistrement de disques, comprenant, en tant qu'unités de disques, au moins une platine (4) et au moins un magasin à disques (6) avec des cases de réception (8) pour les disques ainsi qu'un dispositif de transport (12) qui transporte les disques entre les unités de disques, dans lequel
- le dispositif de transport (12) pour l'opération de prélèvement et d'introduction fait face aux unités de disques correspondantes dans des positions de prélèvement/introduction correspondantes,
- un dispositif à mémoire est prévu pour les différentes positions de prélèvement/introduction,
- un dispositif de réglage pour des valeurs de correction de chacune des positions de prélèvement/introduction par rapport aux valeurs standards des positions de prélèvement/introduction est prévu et chacune des positions de prélèvement/introduction du dispositif de transport (12) est corrigée,
**caractérisé en ce que,** par un déplacement pas à pas du dispositif de transport (12) à partir d'une position de prélèvement/introduction prédéterminée, dans chaque cas d'une course de correction vers le haut ou vers le bas, et par un prélèvement du porte-disque par le dispositif d'extraction consécutif à chaque déplacement, un dispositif de détection pour la détection individuelle de la position détecte dans chaque cas une valeur limite de position supérieure ou inférieure, pour laquelle le dispositif d'extraction ne prélève plus le porte-disque de la case de réception (8) et le dispositif de détection établit une valeur de correction des valeurs limites de position.

2. Appareil de lecture et/ou d'enregistrement de disques selon la revendication 1, **caractérisé en ce qu**'il est prévu un dispositif qui détecte individuellement les positions de prélèvement/introduction du dispositif de transport pour les unités de disques, les valeurs de position détectées servant à la correction des valeurs standards.

3. Appareil de lecture et/ou d'enregistrement de disques selon la revendication 1 ou 2, **caractérisé en ce que** les valeurs de position corrigées sont mémorisées dans le dispositif à mémoire.

4. Appareil de lecture et/ou d'enregistrement de disques selon la revendication 3, **caractérisé en ce que** le dispositif pour la détection individuelle des positions de prélèvement/introduction du dispositif de transport, détermine les positions du dispositif de transport à l'aide de données de position du dispositif d'entraînement correspondant.

5. Appareil de lecture et/ou d'enregistrement de disques selon l'une des revendications 1 à 4, **caractérisé en ce que** le dispositif à mémoire est une mémoire morte (ROM) ou (EPROM).

6. Appareil de lecture et/ou d'enregistrement de disques selon l'une des revendications 1 à 5, **caractérisé en ce qu'**un dispositif (A) détecte la présence d'un disque dans le dispositif de transport au moyen d'un émetteur et d'un récepteur optique de signaux.

7. Procédé pour le positionnement d'un dispositif de transport (12) dans des positions de prélèvement/introduction d'unités de disques d'un appareil de lecture et d'enregistrement de disques dans lequel
- pour chaque position individuelle des unités de disques (4, 6, 10), on détermine la position correspondante du dispositif de transport (12) dans laquelle il fait face aux unités de disques pour le prélèvement/l'introduction de disques et
- les données de correction des positions déterminées sont mémorisées et sont utilisées pour la commande de l'entraînement du dispositif (12) pour le prélèvement/l'introduction de disques,
**caractérisé en ce que** par un déplacement pas à pas du dispositif de transport (12) à partir d'une position de prélèvement/introduction prédéterminée, dans chaque cas d'une course de correction vers le haut ou vers le bas et par un prélèvement du porte-disque par le dispositif d'extraction, on détermine dans chaque cas une valeur limite supérieure et une valeur limite inférieure de la position qui sert à fixer une valeur de correction, le dispositif d'extraction ne prélevant plus le porte-disque de la case de réception (8) lorsque la valeur limite supérieure ou la valeur limite inférieure de la position est atteinte.

8. Procédé selon la revendication 7, **caractérisé en ce que** des valeurs standards sont mémorisées pour les positions individuelles de prélèvement/introduction et les données de position du dispositif de transport (12), déterminées par les positions individuelles de prélèvement/introduction, sont utilisées pour la correction des valeurs standards mémorisées.

9. Procédé selon la revendication 7 ou 8, **caractérisé en ce que** les données de position du dispositif d'entraînement, associé au dispositif de transport (12), sont utilisées pour déterminer la position et/ou pour la correction. 10.

10. Procédé selon la revendication 9, **caractérisé en ce que** la valeur moyenne est déterminée à partir des deux valeurs limites.
